Europäisches Patentamt

European Patent Office

Office européen des brevets

(11) Veröffentlichungsnummer: **0 200 808**
B1

(12) **EUROPÄISCHE PATENTSCHRIFT**

(45) Veröffentlichungstag der Patentschrift:
**20.12.89**

(51) Int. Cl.⁴: **B 03 B 5/56**, A 23 N 12/02

(21) Anmeldenummer: **85105790.1**

(22) Anmeldetag: **10.05.85**

(54) **Vorrichtung zum Trennen von Steinen und (Zucker-)Rüben In einem Schwemmstrom.**

(43) Veröffentlichungstag der Anmeldung:
**12.11.86 Patentblatt 86/46**

(45) Bekanntmachung des Hinweises auf die Patenterteilung:
**20.12.89 Patentblatt 89/51**

(84) Benannte Vertragsstaaten:
**BE DE FR GB IT NL**

(56) Entgegenhaltungen:
**EP-A- 0 142 821**
**DE-A- 3 322 915**
**DE-B- 1 063 995**
**US-A- 4 032 075**

(73) Patentinhaber: **Gerlach, Hildburg, In den Wiesen 8,**
**D-2730 Zeven (DE)**

(72) Erfinder: **Gerlach, Günter, verstorben, --- (DE)**

(74) Vertreter: **Bolte, Erich, Dipl.-Ing. et al, c/o Meissner,**
**Bolte & Partner Patentanwälte Hollerallee 73,**
**D-2800 Bremen 1 (DE)**

**Beschreibung**

Die Erfindung betrifft eine Vorrichtung zum Trennen von Feststoffen unterschiedlichen spezifischen Gewichts in einem Schwemmstrom gemäß dem Oberbegriff des Anspruchs 1.

Eine derartige Vorrichtung ist bekannt aus der EP-A-0142821. Diese zum Einsatz in Zuckerrübenfabriken dienende Vorrichtung wird üblicherweise als «Steinefänger» bezeichnet, der über eine drehbar in einem oben offenen Gehäuse gelagerte Siebtrommel verfügt, die eingangsseitig mit einem Steinefangring und in Strömungsrichtung daran anschließend mit ebenfalls ringförmig ausgebildeten Schöpftaschen versehen ist. Die Steine werden unter Ausnutzung des unterschiedlichen Auftriebsverhaltens derselben einerseits und der übrigen Bestandteile des Schwemmstroms andererseits ausgesondert, nämlich im Bereich des Steinefangrings gesammelt. Dieser bildet dabei einen deutlichen Absatz (Stufe) gegenüber den die Schöpftaschen bildenden Einbauten der Siebtrommel.

Bei diesem bekannten Steinefänger endet der Absatz an der untersten Stelle des Schwemmstroms, indem die Durchmesser der Siebtrommel einerseits und der Schwemmstromanschlüsse andererseits miteinander fluchtend auf der Schwemmstromsohle liegen. Da üblicherweise die Strömungsgeschwindigkeiten in derartigen Steinefängern schwanken, kann es bei diesem bekannten Steinefänger vorkommen, daß bei großen Strömungsgeschwindigkeiten die Steine bis zum Erreichen des Absatzes nicht völlig abgesunken sind und somit über den Steinefänger hinaus in die Siebtrommel gelangen, also der Absatz wirkungslos ist.

Weiter ist aus der DE-B-1063995 eine Vorrichtung bekannt, bei der aus einer Schwertrübe sowohl Schwemm- als auch Sinkgut separiert ausgeschieden werden sollen. Dazu ist diese bekannte Vorrichtung mit einem radial nach innen ragenden, umlaufenden Kranz zur Bildung eines Waschabteils und eines sich daran anschließenden Überlaufabteils versehen. Dabei dient der Kranz dazu, im Waschabteil befindliche Schwertrübe gegenüber der Schwertrübe im Überlaufabteil anzustauen, um ein Potentialgefälle zu schaffen, durch das ein Kreislauf der Schwertrübe in der bekannten Vorrichtung entsteht. Dieser Kranz bildet somit keine Verringerung des Querschnitts bei einem durch die Vorrichtung hindurchfließenden Schwemmstrom. Darüber hinaus sind bei dieser bekannten Vorrichtung infolge des Vorhandenseins einer ein relativ spezifisches Gewicht aufweisenden Schwertrübe andere physikalische Gegebenheiten als bei einem Steinefänger anzutreffen. Insofern eignet sich die bekannte Vorrichtung nicht dazu, auch bei hohen Strömungsgeschwindigkeiten noch eine zuverlässige Sinkabscheidung von Steinen zu gewährleisten.

Der Erfindung liegt demnach die Aufgabe zugrunde, einen Steinefänger gemäß der EP-A-0142821 derart weiterzubilden, daß ungeachtet unterschiedlicher Betriebsbedingungen, insbesondere Strömungsgeschwindigkeiten, Steine oder andere auszusondernde Gegenstände zuverlässig vor der Siebtrommel aussonderbar sind.

Eine Vorrichtung (Steinefänger) zur Lösung dieser Aufgabe weisen die Merkmale des Anspruchs 1 auf. Durch die den freien Strömungsquerschnitt des Schwemmstroms verringernde Blende wird eine deutliche Begrenzung des Schwemmstroms vor der Siebtrommel geschaffen, wodurch auch bei hohen Strömungsgeschwindigkeiten noch nicht vollständig abgesunkene Steine oder dgl. durch die Blende an einem Weiterströmen aus dem Steinefänger hinaus in die Siebtrommel gehindert werden.

Zweckmäßigerweise ist die Blende eintrittsseitig an der Siebtrommel angeordnet, wodurch zum Absinken der Steine der gesamte Bereich des Steinefängers, nämlich seine volle, sich in Längsrichtung der Vorrichtung erstreckende Länge zur Verfügung steht, wodurch bei allen vorkommenden Strömungsgeschwindigkeiten eine zuverlässige Abscheidung der Steine gewährleistet ist.

Nach einem weiteren Merkmal der Erfindung besteht die Blende aus einem radial gerichteten, über den Ansatz hinausragenden Flachprofil bzw. aus einer Mehrzahl längs des Umfangs aneinandergesetzten Flachprofilen.

Die wirksame Höhe (radiale Abmessung) der Blende bestimmt sich nach den örtlichen Betriebsgrößen für den jeweiligen Einsatz, nämlich insbesondere nach der in der betreffenden Zuckerrübenfabrik geltenden Strömungsgeschwindigkeit für den Schwemmstrom. Üblicherweise ist eine Betriebsanlage für die Verarbeitung von Hackfrüchten auf eine bestimmte, stets vorgegebene Strömungsgeschwindigkeit des Schwemmstroms eingestellt. Hierauf wird die Abmessung bzw. Anordnung der Blende ausgerichtet, und zwar derart, daß bei höheren Strömungsgeschwindigkeiten die radiale Höhe der Blende entsprechend größer gewählt ist. Bei geringeren Strömungsgeschwindigkeiten wird die Blende so bemessen bzw. angeordnet, daß die dadurch gebildete Reduzierung des Schwemmstromquerschnitts geringer ist.

Die Blenden können je nach den vorgegebenen Betriebsverhältnissen unterschiedliche Abmessungen aufweisen und bei übereinstimmender Art der Befestigung innerhalb der Siebtrommel zu unterschiedlichen, wirksamen Radialabmessungen führen.

Vorzugsweise werden aber Blenden bzw. Blendensegmente übereinstimmender Abmessung verwendet. Jedes Blendensegment hat mehrere Befestigungsstellen, insbesondere Bohrungen, und zwar mit Abstand in Radialrichtung voneinander. Die für den jeweiligen Betriebsfall passenden Bohrungen dienen dann zur Befestigung der Blendensegmente mit Hilfe von Schraubenbolzen an der Siebtrommel, nämlich an dem Absatz derselben.

Bei dieser Ausbildung der Blenden bzw. Blendensegmente ist es auch möglich, diese nachträglich innerhalb der Siebtrommel zu versetzen, um eine Vergrößerung oder Verkleinerung der wirksamen Höhe der Blende zu bewirken.

Die erfindungsgemäße Blende ist auch bei Steinefängern einsetzbar, die mit mehreren, beispielsweise zwei Steinefangringen und entsprechend zugeordneten Schöpftaschen ausgestattet sind.

Ein Ausführungsbeispiel der Erfindung wird nachfolgend anhand der Zeichnungen näher erläutert. Es zeigt:

Fig. 1 einen Steinefänger in schematischem Längsschnitt;

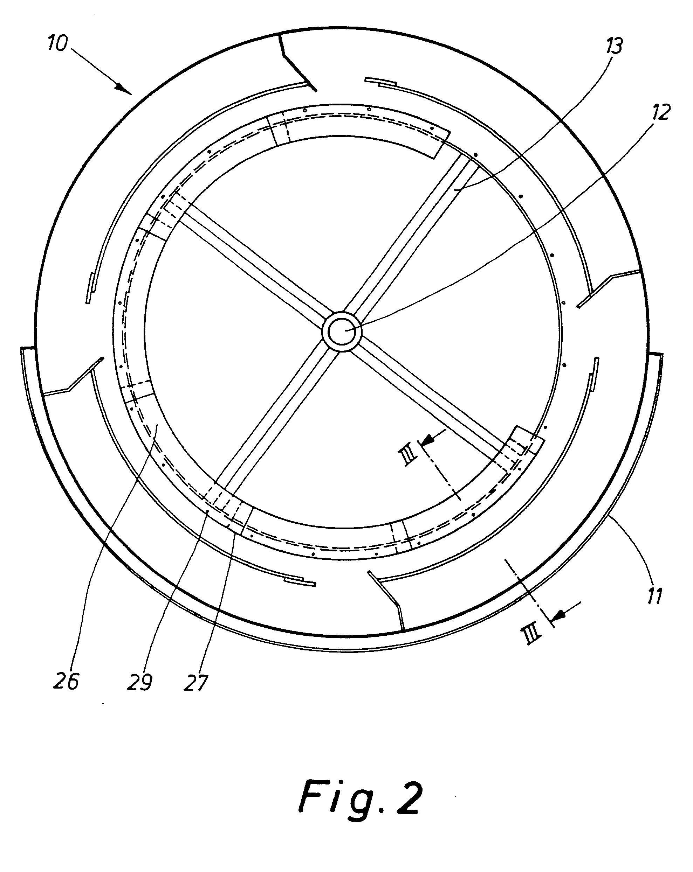

Fig. 2 einen Querschnitt durch den Steinefänger gemäß Fig. 1 in der Ebene II–II;

Fig. 3 eine Einzelheit des Steinefängers bzw. einer (Sieb-)Trommel desselben im Radialschnitt III–III der Fig. 2 bei vergrößertem Maßstab;

Fig. 4 eine Einzelheit einer Blende, nämlich ein Blendensegment, in Seitenansicht;

Fig. 5 eine Ansicht V–V zu der Einzelheit gemäß Fig. 4;

Fig. 6 einen Ausschnitt der (Sieb-)Trommel im Grundriß bzw. in radial gerichteter Ansicht.

Die in den Zeichnungen dargestellte Vorrichtung ist ein Steinefänger für den Einsatz in einer Zuckerrübenfabrik. Soweit im einzelnen nicht beschrieben, kann dieser Steinefänger nach Maßgabe der EP-A-0142821 ausgebildet sein.

Der Steinefänger besteht danach aus einer Trommel, nämlich einer Siebtrommel 10, die in einem feststehenden Gehäuse 11 drehbar gelagert ist. Eine mittige Drehachse 12, die über radiale Stützarme 13 in der Siebtrommel 10 abgestützt ist, findet Aufnahme in Lagern 14 und 15 außerhalb der Siebtrommel 10.

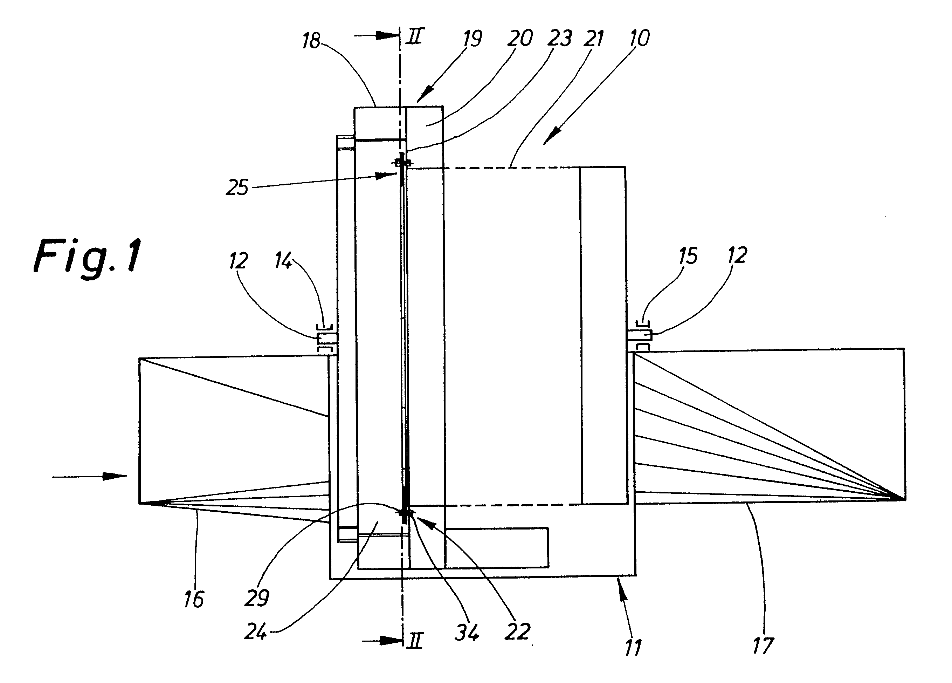

Das Gehäuse 11 ist im Querschnitt annähernd halbkreisförmig ausgebildet, also oben offen. Des weiteren ist das Gehäuse 11 in einen einen Schwemmstrom aufnehmenden Schwemmstromkanal eingebaut, der einen im wesentlichen rechteckigen Querschnitt hat. In Fig. 1 sind ein eintrittsseitiger Schwemmstromanschluß 16 und ein austrittsseitiger Schwemmstromanschluß 17 gezeigt. Diese sind zu beiden Seiten der Siebtrommel 10 mit dem Gehäuse 11 verbunden, so daß dieses einen Teil des Schwemmstromkanals bildet.

Die Siebtrommel 10 ist mit Einbauten versehen, die bei Drehung um die Drehachse 12 eine Aussonderung von Steinen und ähnlichen schweren Gegenständen aus dem Schwemmstrom bewirken, während die spezifisch leichteren Bestandteile, nämlich Rüben, Rüben-Bruchstücke und Kraut, die Siebtrommel über den austrittsseitigen Schwemmstromanschluß 17 wieder verlassen.

Die Einbauten sind bei dem vorliegenden Ausführungsbeispiel im eintrittsseitigen Bereich der Siebtrommel 10 angeordnet. In Strömungsrichtung ist als erstes ein Steinefangring 18 gebildet, und zwar im Bereich einer radialen Erweiterung 19 der Siebtrommel 10. Unmittelbar benachbart, nämlich in Strömungsrichtung anschließend, ist eine Mehrzahl von sich in Umfangsrichtung der Siebtrommel 10 erstreckenden, teilringförmig ausgebildeten Schöpftaschen 20 angeordnet. Auch diese befinden sich im Bereich der radialen Erweiterung 19 der Siebtrommel 10, haben jedoch einen Innendurchmesser, der im vorliegenden Fall demjenigen eines mit Durchtrittsöffnungen (Löchern) versehenen Trommelmantels 21 entspricht.

Durch diese Gestaltung bzw. Dimensionierung des Steinefangrings 18 einerseits und der Schöpftaschen 20 andererseits entsteht als Übergang ein Absatz 22, der zugleich eine Verengung des Strömungsquerschnitts für den Schwemmstrom bewirkt. Der Absatz 22 wird durch eine in Radialrichtung weisende Wand 23 als seitliche Begrenzung der Schöpftaschen 20 gebildet. Zugleich begrenzt die Wand 23 eine im Bereich des Steinefangrings 18 gebildete, sich in Umfangsrichtung erstreckende Sammelrinne 24 zur zeitweiligen Aufnahme von an dem Absatz 22, nämlich an der Wand 23, gesammelten Steinen. Während nämlich der Schwemmstrom mit den spezifisch leichteren Bestandteilen durch die Siebtrommel 10 hindurchläuft, werden die schweren Steine im Bereich der Sammelrinne 24 aufgefangen und über im einzelnen nicht gezeigte Organe (Rutsche) in Verbindung mit dem Steinefangring 18 nach außen abgefördert.

Um den Strömungsquerschnitt bzw. die Höhe des Absatzes 22 zum Anstauen der Steine an unterschiedliche Betriebsgrößen anpassen zu können, ist eine Blende 25 in die Siebtrommel 10 eingebaut. Diese ragt über die sonstigen Einbauten der Siebtrommel 10 nach innen hinaus, so daß eine radiale Querschnittsminderung erzielt wird. Bei dem hier gezeigten, bevorzugten Ausführungsbeispiel ist die Blende 25 an der radial gerichteten Wand 23 des Absatzes 22 angebracht.

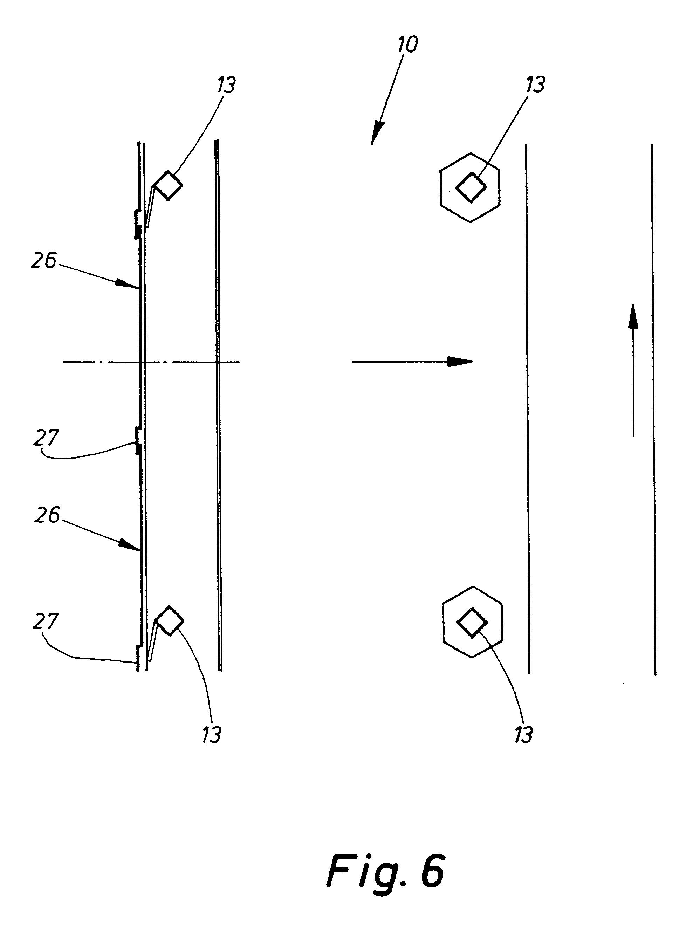

Die Blende 25 besteht hier aus ringförmigem Flachmaterial, nämlich aus einzelnen, bogenförmig ausgebildeten Blendensegmenten 26. Mehrere übereinstimmend ausgebildete Blendensegmente 26 werden in Umfangsrichtung aneinander anschließend zur Bildung einer durchgehenden ringförmigen Blende 25 an der Wand 23 befestigt. Jeweils ein Ende der Blendensegmente 26 ist mit einer (angeschweißten) Abkröpfung 27 versehen, die eine Teilüberlappung benachbarter Blendensegmente 26 ermöglicht, wie im einzelnen in Fig. 6 gezeigt.

Die Blendensegmente 26 sind bei dem vorliegenden Ausführungsbeispiel lösbar in der Siebtrommel 10 angebracht. Zu diesem Zweck sind an der radial gerichteten Wand 23 benachbart zum innenliegenden Rand derselben Bohrungen 28 mit Abstand in Umfangsrichtung voneinander vorgesehen. Durch diese können Verbindungsmittel, nämlich Schraubenbolzen 29, hindurchgeführt werden zur Befestigung der Blendensegmente 26. Diese sind hierfür ebenfalls mit Bohrungen 30 versehen. Bei dem vorliegenden Ausführungsbeispiel ist auf der zu den Blendensegmenten 26 gegenüberliegenden Rückseite der Wand 23 im Bereich der Bohrung 28 eine Schraubenmutter 34 befestigt (angeschweißt), in die der Schraubenbolzen 29 zum Befestigen der Blendensegmente 26 eingeführt wird.

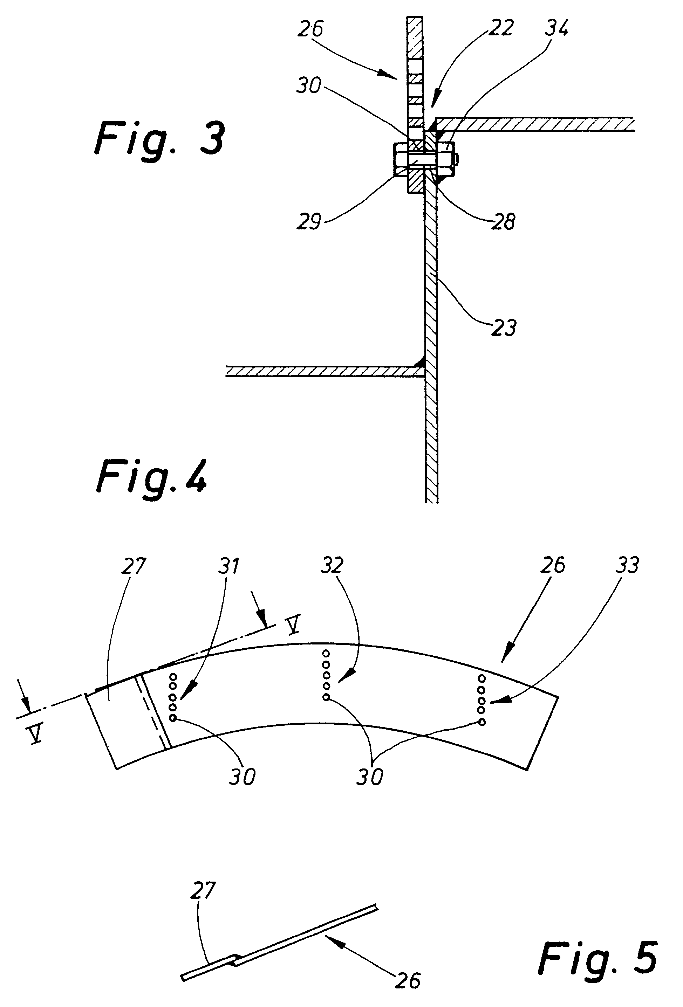

Die Blendensegmente 26 können in unterschiedlichen Relativstellungen zur Siebtrommel 10 bzw. zur Wand 23 an dieser angebracht werden, um unterschiedliche radiale Höhen der Blende 25 je nach den gegebenen Betriebsverhältnissen zu ermöglichen. Zu diesem Zweck ist im vorliegenden Falle jedes Blendensegment 26 mit mehreren Befestigungspunkten zur alternativen Anbringung an der Wand 23 versehen. Wie in Fig. 4 gezeigt, hat jede Blende 25 mehrere, nämlich drei Reihen 31, 32, 33 von Bohrungen 30 mit im wesentlichen radialen Abständen voneinander. Die Reihen 31, 32, 33 der Bohrungen 30 sind parallel zueinander angeordnet, so daß durch Parallelverschiebung der Blendensegmente 26 deren Relativstellung verändert werden kann. Üblicherweise wird bei der Erstellung eines Steinefängers der für diesen geltende Betriebsfall, insbesondere die Strömungsgeschwindigkeit des Schwemmstroms, festgestellt und danach entsprechend die Blende 25 angebracht. Nach der Inbetriebnahme ist üblicherweise eine Veränderung der Stellung der Blendensegmente 26 nicht erforderlich. Bei der lösbaren Befestigung der Blendensegmente 26 ermöglicht jedoch auch das vorliegende Ausführungsbeispiel eine nachträgliche Verstellung der Blende 25.

Bei dem vorstehenden Ausführungsbeispiel ist die Blende 25 an einem bereits vorgegebenen Absatz 22 angebracht, an dem sich die Steine stauen. Es ist aber auch möglich, die Blende 25 an einer anderen Stelle innerhalb der Siebtrommel 10 anzubringen, derart, daß eine Sammel- bzw. Prallwand für die Steine ausschließlich durch die Blende 25 gebildet ist.

## Patentansprüche

1. Vorrichtung zum Trennen von Feststoffen unterschiedlichen spezifischen Gewichts in einem Schwemmstrom, insbesondere zum Trennen von Steinen einerseits und Hackfrüchten (Zuckerrüben) andererseits, mit einer in einem Gehäuse (11) drehbar gelagerten Siebtrommel (10) und wenigstens einem vor der Siebtrommel (10) angeordneten Steinefangring zum Aufnehmen der Steine aus dem Schwemmstrom, dadurch gekennzeichnet, daß zur örtlichen Begrenzung des Schwemmstroms vor der Siebtrommel (10) eine den freien Strömungsquerschnitt des Schwemmstroms verringernde Blende (25) angeordnet ist.

2. Vorrichtung nach Anspruch 1, dadurch gekennzeichnet, daß die Blende (25) eintrittsseitig an der Siebtrommel (10) angeordnet ist.

3. Vorrichtung nach den Ansprüchen 1 und 2, dadurch gekennzeichnet, daß innerhalb der Siebtrommel (10) eine ringförmige Kante bzw. ein Absatz (22) vorgesehen und an diesem die Blende (25) angeordnet ist.

4. Vorrichtung nach einem oder mehreren der Ansprüche 1 bis 3, dadurch gekennzeichnet, daß die Blende (25) in Form eines Kreisringes vorgesehen ist, wobei die Blendenebene senkrecht zur Drehachse der Siebtrommel steht.

5. Vorrichtung nach einem oder mehreren der Ansprüche 1 bis 4, dadurch gekennzeichnet, daß die Öffnung der Blende (25) veränderbar ist durch entsprechende Relativstellung der Blende (25) zur Siebtrommel (10).

6. Vorrichtung nach einem oder mehreren der Ansprüche 1 bis 5, dadurch gekennzeichnet, daß die Blende (25) aus mehreren, insbesondere aus acht aneinander anschließenden Blendensegmenten (26) in Gestalt von bogenförmigen Flachprofilen, zusammengesetzt ist.

7. Vorrichtung nach einem oder mehreren der Ansprüche 1 bis 6, dadurch gekennzeichnet, daß ein Blendensegment (26) an der Verbindungsstelle zum benachbarten Blendensegment (26) mit einer Abkröpfung (27) versehen ist und diese mit dem benachbarten Blendensegment (26) überlappend angeordnet ist.

8. Vorrichtung nach einem oder mehreren der Ansprüche 1 bis 7, dadurch gekennzeichnet, daß bei einer Siebtrommel (10) mit wenigstens eintrittsseitig angeordnetem Steinefangring (18) und seitlichen anschließenden Schöpftaschen (20) die Blende (25), bzw. die Blendensegmente (26) an einer radialgerichteten Wand (23) zwischen Steinefangring (18) und Schöpftaschen (20) befestigt sind.

9. Vorrichtung nach einem oder mehreren der Ansprüche 1 bis 8, dadurch gekennzeichnet, daß jedes Blendensegment (26) mit mindestens einer Befestigungsstelle zur Befestigung in alternativen Relativstellungen in Form einer radialgerichteten Reihe von Bohrungen (30) und vorzugsweise weiteren parallelen, im wesentlichen radialgerichteten Reihen von Bohrungen (30), versehen ist.

10. Vorrichtung nach einem oder mehreren der Ansprüche 1 bis 9, dadurch gekennzeichnet, daß die radialgerichtete Wand (23) in regelmäßigen Abständen Befestigungsmittel für die Blendensegmente (26) aufweist.

11. Vorrichtung nach einem oder mehreren der Ansprüche 1 bis 10, dadurch gekennzeichnet, daß die Bohrungen (30) der Blendensegmente (26) mit den Bohrungen (28) der radialgerichteten Wand (23) korrespondieren, insbesondere dergestalt, daß die Blendensegmente (26) mittels Bolzen, Stiften, Nieten, Schrauben oder dgl. über mindestens eine Bohrung (30) jeder Reihe und die Bohrungen der Wand (28) verbindbar sind.

## Claims

1. Device for separating solids of different relative density in a fluming stream, in particular for separating stones on the one hand and root crops (sugar beet) on the other hand, having a screening drum (10) rotatably mounted in a casing (11) and at least one stone-catching ring arranged upstream of the screening drum (10) for taking up the stones from the fluming stream, characterized in that an orifice plate (25) which reduces the free cross-section of flow of the fluming stream is provided for local restriction of the fluming stream upstream of the screening drum (10).

2. Device according to claim 1, characterized in that the orifice plate (25) is arranged on the screening drum (10) at the inlet side.

3. Device according to claims 1 and 2, characterized in that an annular edge or a step (22) is provided inside the screening drum and the orifice plate (25) is arranged at the latter.

4. Device according to one or more of claims 1 to 3, characterized in that the orifice plate (25) is provided in the form of a circular ring, the plane of the orifice plate lying perpendicular to the axis of rotation of the screening drum.

5. Device according to one or more of claims 1 to 4, characterized in that the opening of the orifice plate (25) can be altered by appropriate positioning of the orifice plate (25) relative to the screening drum (10).

6. Device according to one or more of claims 1 to 5, characterized in that the orifice plate (25) is composed of a plurality, in particular eight, adjoining orifice-plate segments (26) in the form of arcuate flat sections.

7. Device according to one or more of claims 1 to 6, characterized in that an orifice-plate segment (26) is provided, at the joint with the adjacent orifice-plate segment (26), with an offset (27) and the latter ist arranged overlappingly with the adjacent orifice-plate segment (26).

8. Device according to one or more of claims 1 to 7, characterized in that, in the case of a screening drum (10) having a stone-catching ring (18) arranged at least on the inlet side and having lateral adjoining scoop pockets (20), the orifice plate (25) or the orifice-plate segments (26) are fixed to a radially directed wall (23) between stone-catching ring (18) and scoop pockets (20).

9. Device according to one or more of claims 1 to 8, characterized in that each orifice-plate segment (26) is provided with at least one fixing point for fixing in alternative relative positions, in the form of a radially directed row of bores (30) and, preferably, further parallel, essentially radially directed rows of bores (30).

10. Device according to one or more of claims 1 to 9, characterized in that the radially directed wall (23) has fixing means at regular intervals for the orifice-plate segments (26).

11. Device according to one or more of claims 1 to 10, characterized in that the bores (30) of the orifice-plate segments (26) correspond to the bores (28) of the radially directed wall (23), in particular in such a way that the orifice-plate segments (26) can be connected by means of bolts, pins, rivets, screws or the like via at least one bore (30) of each row and the bores of the wall (28).

**Revendications**

1. Dispositif de séparation de matières solides présentant différents poids spécifiques dans un courant de lavage, en particulier pour séparer, d'une part, des pierres et, d'autre part, des plantes sarclées (betteraves sucrières), comprenant un tambour de criblage (10) supporté de manière rotative dans un carter (11) et au moins un anneau de collecte des pierres agencé en amont du tambour de criblage (10) pour recevoir les pierres provenant du courant de lavage, caractérisé en ce qu'un écran (25) réduisant la section transversale d'écoulement libre du courant de lavage est agencé devant le tambour de criblage (10) pour limiter localement le courant de lavage.

2. Dispositif suivant la revendication 1, caractérisé en ce que l'écran (25) est agencé sur le tambour de criblage (10) du côté entrée.

3. Dispositif suivant l'une des revendications 1 et 2, caractérisé en ce qu'un bord annulaire ou respectivement un gradin (22) est prévu à l'intérieur du tambour de criblage (10) et en ce que l'écran (25) est agencé sur ce dernier.

4. Dispositif suivant une ou plusieurs des revendications 1 à 3, caractérisé en ce que l'écran (25) est prévu sous la forme d'un anneau circulaire, le plan de l'écran étant perpendiculaire à l'axe de rotation du tambour de criblage.

5. Dispositif suivant une ou plusieurs des revendications 1 à 4, caractérisé en ce que l'ouverture de l'écran (25) peut être modifiée par une position relative correspondante de l'écran (25) par rapport au tambour de criblage (10).

6. Dispositif suivant une ou plusieurs des revendications 1 à 5, caractérisé en ce que l'écran (25) est composé de plusieurs, en particulier de huit, segments d'écran (26) raccordés l'un à l'autre et sous la configuration de profilés plans de forme arquée.

7. Dispositif suivant une ou plusieurs des revendications 1 à 6, caractérisé en ce qu'un segment d'écran (26) est pourvu d'un coudage (27) à l'emplacement de liaison au segment d'écran voisin (26) et en ce que ce coudage est agencé de manière à recouvrir le segment d'écran voisin (26).

8. Dispositif suivant une ou plusieurs des revendications 1 à 7, caractérisé en ce que, dans le cas d'un tambour de criblage (10) présentant au moins un anneau de collecte des pierres (18) agencé du côté entrée et des poches de puisage latérales ultérieures (20), l'écran (25) ou les segments d'écran (26) sont fixés sur une paroi dirigée radialement (23) située entre l'anneau de collecte des pierres (18) et les poches de puisage (20).

9. Dispositif suivant une ou plusieurs des revendications 1 à 8, caractérisé en ce que chaque segment d'écran (26) est pourvu d'au moins un emplacement de fixation pour la fixation dans des positions relatives alternatives, sous la forme d'une rangée, orientée radialement, de perforations (30) et de préférence d'autres rangées de perforations (30) parallèles, orientées sensiblement radialement.

10. Dispositif suivant une ou plusieurs des revendications 1 à 9, caractérisé en ce que la paroi dirigée radialement (23) présente à des distances régulières des moyens de fixation pour les segments d'écran (26).

11. Dispositif suivant une ou plusieurs des revendications 1 à 10, caractérisé en ce que les perforations (30) des segments d'écran (26) correspondent aux perforations (28) de la paroi dirigée radialement (23), en particulier de telle façon que les segments d'écran (26) puissent, au moyen de boulons, de goupilles, de rivets, de vis ou d'éléments analogues, être reliés par l'intermédiaire d'au moins une perforation (30) de chaque rangée et des perforations de la paroi (28).

Fig.1

*Fig. 2*

*Fig. 3*

*Fig. 4*

*Fig. 5*

*Fig. 6*